# EUROPEAN PATENT APPLICATION

(11) **EP 3 716 690 A1**
(43) Date of publication of application: **30.09.2020**
(21) Application number: 19750951.6
(22) Date of filing: 02.02.2019
(51) Int. Cl.: H04W 40/22

(54) **ELECTRONIC APPARATUS, WIRELESS COMMUNICATION METHOD AND COMPUTER-READABLE MEDIUM**

(30) Priority: 08.02.2018 CN 201810127319
(71) Applicant: Sony Corporation, 108-0075 Tokyo (JP)
(72) Inventor: ZUO, Huiling, Beijing 100876 (CN); LI, Na, Beijing 100876 (CN); WANG, Haowei, Beijing 100876 (CN); CUI, Tao, Beijing 100028 (CN); XIE, Yuxuan, Beijing 100876 (CN); WANG, Song, Beijing 100876 (CN)
(74) Representative: D Young & Co LLP
(86) International application number: PCT/CN2019/074547
(87) International publication number: WO 2019/154352

(57) **Abstract**

The present disclosure relates to an electronic apparatus, a wireless communication method and a computer-readable medium. According to one embodiment, an electronic apparatus for a user equipment side comprises a processing circuit. The processing circuit is configured to carry out control so that a current user equipment receives transmission information sent by another user equipment via an unlicensed frequency band, wherein the destination of the transmission information is a service base station of the current user equipment. The processing circuit is also configured to carry out control so that indication information is sent to the other user equipment, wherein the indication information indicates whether the current user equipment needs to relay the transmission information.

## Description

### FIELD

The present disclosure generally relates to the field of wireless communication, and in particular to an electronic device and a wireless communication method for user equipment side, an electronic device and a wireless communication method for base station side, and a computer readable medium.

### BACKGROUND

In order to improve a coverage of a cellular network, one possible solution is to deploy more base stations densely. However, a deployment of the base stations results in a high cost. Moreover, a multi-hop relay may be considered.

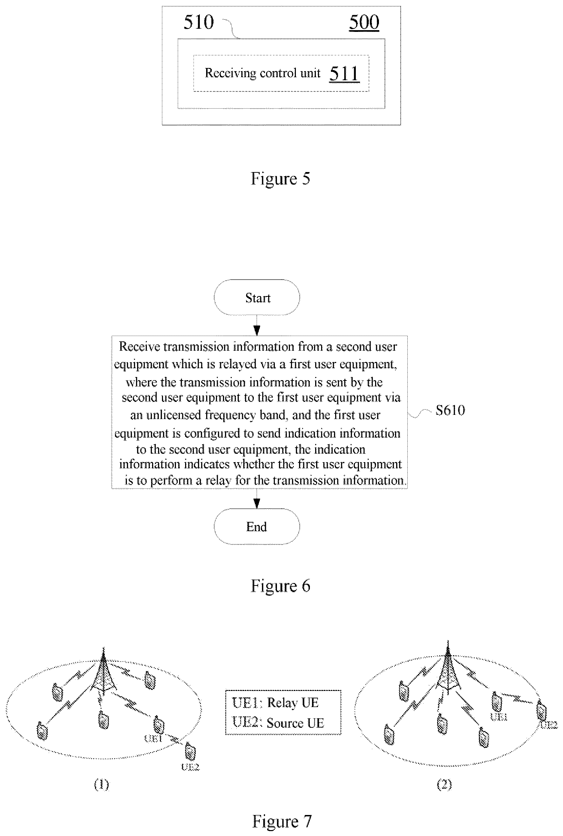

Figure 7 shows an example of a scenario of a relay. As shown in Figure 7(1), UE1 is within a signal coverage of a base station while UE2 is outside the signal coverage of the base station. In this case, UE2 can transmit uplink data via a relay performed by UE1. UE1 may be referred to as relay UE, and UE2 may be referred to as resource UE.

### SUMMARY

Brief summary of embodiments of the present disclosure is given hereinafter, to provide basic understanding for certain aspects of the present disclosure. It should be understood that, the summary is not exhaustive summary of the present disclosure. The summary is not intended to determine key parts or important parts of the present disclosure, and is not intended to limit the scope of the present disclosure. An object of the summary is only to give some concepts of the present disclosure in a simplified form, as preamble of the detailed description later.

According to an embodiment, an electronic device for user equipment side is provided. The device includes a processing circuitry. The processing circuitry is configured to perform control to receive, by a current user equipment, transmission information sent by another user equipment via an unlicensed frequency band, a destination of the transmission information is a service base station of the current user equipment. The processing circuitry is further configured to perform control to send indication information to the another user equipment, the indication information indicates whether the current user equipment is to perform a relay for the transmission information.

According to another embodiment, a wireless communication method for user equipment side is provided. The method includes the steps of receiving, by a current user equipment, transmission information sent by another user equipment via an unlicensed frequency band, a destination of the transmission information is a service base station of the current user equipment. The method further includes the steps of sending indication information to the another user equipment, the indication information indicates whether the current user equipment is to perform a relay for the transmission information.

According to yet another embodiment, an electronic device for user equipment side is provided. The device includes a processing circuitry. The processing circuitry is configured to perform control to send, by a current user equipment, transmission information to another user equipment via an unlicensed frequency band, a destination of the transmission information is a service base station of the another user equipment. The processing circuitry is further configured to perform control to receive indication information from the another user equipment, the indication information indicates whether the another user equipment is to perform a relay for the transmission information.

According to still another embodiment, a wireless communication method for user equipment side is provided. The method includes the steps of sending, by a current user equipment, transmission information to another user equipment via an unlicensed frequency band, a destination of the transmission information is a service base station of the another user equipment. The method further includes the steps of receiving indication information from the another user equipment, the indication information indicates whether the another user equipment is to perform a relay for the transmission information.

According to yet another embodiment, an electronic device for base station side is provided. The device includes a processing circuitry. The processing circuitry is configured to perform control to receive transmission information from a second user equipment which is relayed via a first user equipment. The transmission information is sent by the second user equipment to the first user equipment via an unlicensed frequency band. The first user equipment is configured to send indication information to the second user equipment, the indication information indicates whether the first user equipment is to perform a relay for the transmission information.

According to still another embodiment, a wireless communication method for base station side is provided. The method includes the steps of receiving transmission information from a second user equipment which is relayed via a first user equipment. The transmission information is sent by the second user equipment to the first user equipment via an unlicensed frequency band. The first user equipment is configured to send indication information to the second user equipment, the indication information indicates whether the first user equipment is to perform a relay for the transmission information.

According to still another embodiment, a computer readable medium is provided. The medium includes executable instructions. When the executable instructions are executed by an information processing apparatus, the executable instructions cause the information processing apparatus to implement the method according to above embodiments.

With embodiments of the present disclosure, a delay of relay transmission is reduced.

### BRIEF DESCRIPTION OF THE DRAWINGS

The present disclosure may be understood better with reference to the description given in conjunction with drawings hereinafter. The same or similar reference numerals are used to indicate the same or similar components throughout all the drawings. The drawings together with the following detailed description are included in the specification, form a part of the specification, and are used to further illustrate preferred embodiments of the present disclosure and explain principles and advantages of the present disclosure by examples. In the drawings:
Figure 1 is a block diagram showing a configuration example of an electronic device for user equipment side according to an embodiment of the present disclosure;
Figure 2 is a flowchart showing a process example of a wireless communication method for user equipment side according to an embodiment of the present disclosure;
Figure 3 is a block diagram showing a configuration example of an electronic device for user equipment side according to an embodiment of the present disclosure;
Figure 4 is a flowchart showing a process example of a wireless communication method for user equipment side according to an embodiment of the present disclosure;
Figure 5 is a block diagram showing a configuration example of an electronic device for base station side according to an embodiment of the present disclosure;
Figure 6 is a flowchart showing a process example of a wireless communication method for base station side according to an embodiment of the present disclosure;
Figure 7 is a schematic diagram showing an example of a scenario in which a relay is applied;
Figure 8 is a schematic diagram showing an example of a uplink data transmission of a resource UE and a relay UE;
Figure 9 shows a signaling procedure of a random access process;
Figure 10 is a schematic diagram showing another example of a uplink data transmission of a resource UE and a relay UE;
Figure 11 shows a signaling procedure of a data transmission process according to an exemplary embodiment;
Figure 12 is a block diagram showing an exemplary structure of a computer for implementing the method and apparatus of the present disclosure;
Figure 13 is a block diagram showing an example of a schematic configuration of a smart phone to which the technology according to the present disclosure may be applied; and
Figure 14 is a block diagram showing an example of a schematic configuration of a gNB (base station in a 5G system) to which the technology according to the present disclosure may be applied.

### DETAILED DESCRIPTION OF EMBODIMENTS

Hereinafter embodiments of the present disclosure are described with reference to the drawings. Elements and features described in one drawing or one embodiment of the present disclosure may be combined with elements and features described in one or more other drawings or embodiments. It should be noted that, indication and description of components and processing which are not related to the present disclosure or well known for those skilled in the art are omitted in the drawings and illustrations for clearness.

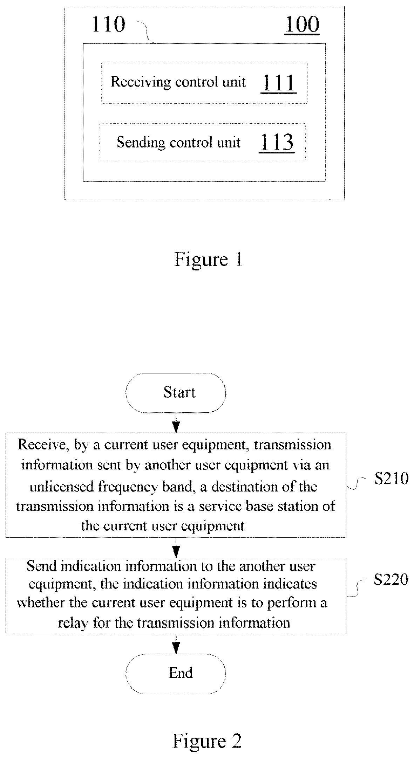

As shown in Figure 1, an electronic device 100 for user equipment side according to the present embodiment includes a processing circuitry 110. The processing circuitry 110 may be implemented as, for example, a specific chip, a chip group, a central processing unit (CPU) and the like.

The processing circuitry 110 includes a receiving control unit 111 and a sending control unit 113. It should be noted that although the receiving control unit 111 and the sending control unit 113 are shown as functional blocks in the drawing, it should be understood that functions of these units may be implemented by the processing circuitry 110 as a whole, and are not necessarily implemented by discrete actual components in the processing circuitry 110. In addition, although the processing circuitry 110 is shown by one block, the electronic device 100 may include multiple processing circuitries. The functions of the receiving control unit 111 and the sending control unit 113 may be distributed to multiple processing circuitries, and thus the multiple processing circuitries cooperate to perform the functions.

The receiving control unit 111 is configured to perform control to receive, by a current user equipment, transmission information sent by another user equipment via an unlicensed frequency band, a destination of the transmission information is a service base station of the current user equipment. Although the transmission information is expressed as data in some later exemplary embodiments, the transmission information may further include control information or the like.

According to the present embodiment, the current user equipment supplies a relay service for the another user equipment. That is, the "current user equipment" corresponds to the above relay UE, and the "another user equipment" corresponds to the above resource UE. In other words, the electronic device 100 according to the present embodiment is used for the relay UE side.

Next, an exemplary process of receiving transmission information by the receiving control unit 111 is illustrated in conjunction with the example of the scenario according to Figure 7. Assuming that the UE1 is selected as a relay for the UE2, the UE2 may perform a Listen Before Talk (LBT) on some subchannels or carriers (or subcarriers) of the unlicensed frequency band and select an idle subchannel to send uplink transmission information of the UE2 to the UE1 in the selected idle subchannel.

The UE1 may detect data from other UEs in various ways during an idle mode.

As an example, the UE1 may switch from an idle state to a data receiving state at a predetermined timing, and the UE2 may send a scheduling request or uplink data at a certain timing. As an example, a method similar to a discontinuous reception (DRX) may be adopted to perform above process, and the present disclosure is not limited to the method.

Accordingly, according to an embodiment, the receiving control unit 111 may be configured to perform control to receive a scheduling request and/or data from the another user equipment at a predetermined timing.

As another example, the UE2 may send a wakeup signal to the UE1. In this case, the wakeup signal is equivalent to the scheduling request from the UE2.

Accordingly, according to an embodiment, the receiving control unit 111 may be configured to perform control to detect a wakeup signal from the another user equipment.

In addition, the UE2 may send the transmission information to the UE1 in various resource configuration manners.

As an example, the UE2 may adopt a grant-free transmission method. For example, the UE2 may select randomly a resource from a resource pool. The resource pool may be, for example, configured in advance or configured semi-statically by a base station.

Accordingly, according to an embodiment, the receiving control unit 111 may be configured to receive the transmission information sent by the another user equipment by using a resource selected by the another user equipment from a resource pool. The resource pool may be configured in advance or configured semi-statically by a base station.

As an example, a resource used by the UE2 may be determined by the UE1 and the UE2 may be, for example, informed of the determined resource through a sidelink grant (SL grant) signaling.

Accordingly, according to an embodiment, the processing circuitry 110 may be further configured to determine a communication resource to be used by the another user equipment, and the determined resource may be indicated to the another user equipment through, for example, a sidelink grant. Therefore, the another user equipment may send the transmission information by using the resource indicated by the current user equipment.

With continued reference to Figure 1, the sending control unit 113 is configured to send indication information to the another user equipment, the indication information indicates whether the current user equipment is to perform a relay for the transmission information from the another user equipment.

As an example, the indication information may include 1 bit (0/1) indication information. Specifically, 1 may, for example, indicate the current user equipment not to perform a relay for the transmission information from the another user equipment, in this case, the another user equipment is required to select other relay devices; 0 may, for example, indicate the current user equipment to perform a relay for the transmission information from the another user equipment, in this case, the another user equipment is not required to reselect the relay device.

According to an embodiment, the above indication information may be sent via a physical sidelink control channel (PSCCH) and a sending process of the indication information may be similar to a device-to-device (D2D) communication scenario.

In addition, according to an embodiment, the current user equipment may send the above indication information by sharing a maximum occupancy time (MCOT) of the another user equipment for the unlicensed frequency band.

Specifically, as demonstrated in the foregoing examples, the UE2 may send the transmission information to the UE1 in various resource configuration manners. After the UE1 receives the transmission information from the UE2, in a case that the MCOT of the UE2 for a communication resource acquired by the UE2 is not expired, the UE1 may send the above indication information to the UE2 in the MCOT by using the communication resource. In this case, the UE1 may perform the Listen Before Talk for the communication resource before sending the indication information, for example, a 25us LBT (Type 2 LBT), to avoid a collision.

Next, it is described a process that how the current user equipment (corresponding to the UE1 in above example) determines whether to perform a relay for the transmission information from the another user equipment (corresponding to the UE2 in above example).

According to an embodiment, the current user equipment may determine, under a predetermined condition, not to perform a relay for the transmission information from the another user equipment. The sending control unit 113 may send corresponding indication information to the another user equipment. The predetermined condition may be related to uplink data to be sent of the current user equipment. For example, the predetermined condition may include at least one of the following conditions:
a) the current user equipment itself has uplink data to be sent;
b) a data amount of the uplink data to be sent of the current user equipment is greater than a predetermined threshold; and
c) an available buffer capacity of the current user equipment is less than a predetermined threshold.

In general, in a case that the uplink data to be sent by the current user equipment may result in a larger delay on a relay for the another user equipment, the another user equipment can be indicated to select other relay devices, thereby decreasing a total delay of a relay process.

The above determining process may be performed after the UE1 detects the transmission information from the UE2. In a case that the UE1 determines not to supply a relay to the UE2, after the UE2 receives corresponding indication information, the UE2 may stop sending the transmission information to the UE1 and select another relay device (route reselecting).

On the other hand, for a case that the UE1 is to supply a relay to the UE2, an exemplary process of a relay transmission is illustrated below in conjunction with specific embodiments.

According to an embodiment, in a case where at the time of receipt of the transmission information from the another user equipment the current user equipment has performed a random access process for sending uplink data to be sent of the current user equipment, the transmission information of the another user equipment is sent upon completion of sending the uplink data of the current user equipment.

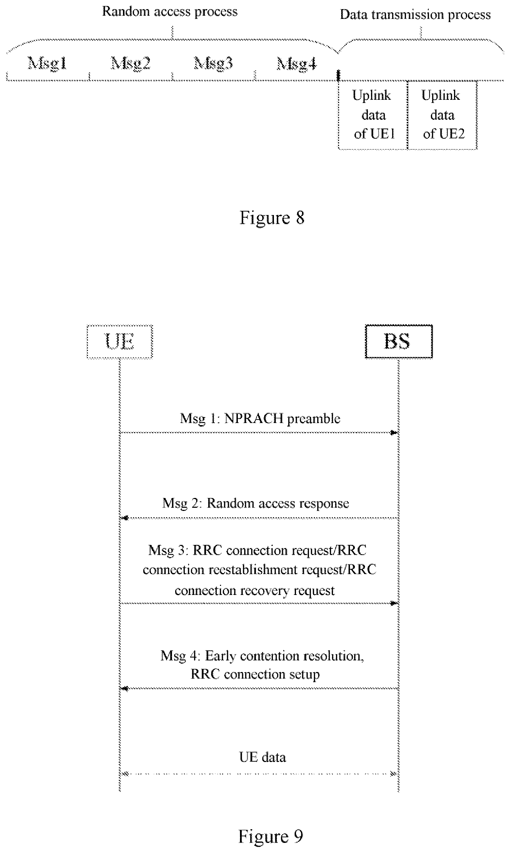

Figure 8 shows an exemplary embodiment of a data transmission in a case that the UE1 has performed a random access process when the UE1 detects the transmission information from the UE2. In this case, the UE1 itself has uplink data to be sent and the transmission information from the UE2 is sent upon completion of sending the uplink data of the UE1.

As shown in Figure 8, the UE1 sends its own the uplink data in a usual way. Uplink data from the UE2 will be sent upon completion of sending the uplink data of the UE1.

In a case where at the time of receipt of the transmission information from the another user equipment the current user equipment has no uplink data to be sent, a random access process for sending the transmission information of the another user equipment may be performed.

In addition, at least a part of the transmission information of the another user equipment may be sent in Msg 3 in the random access process, thereby improving relay efficiency further.

Specifically, in a case where at the time of receipt of the transmission information from the UE2 the UE1 has no uplink data to be sent, that is, the UE1 is in the idle state, the UE1 may send uplink data from the UE2 to the base station immediately. In this case, in order to decrease the delay further and reduce power, the UE1 may send the uplink data from the UE2 early in, for example, the Msg 3 in the random access process.

The random access process herein is illustrated briefly below with reference to Figure 9.

Figure 9 shows an example of a signaling interaction between the user equipment UE and the base station BS in the random access process. As shown in Figure 9, in the exemplary random access process, first, the UE sends a first message Msg 1 to the BS, and the Msg 1 may include, for example, a physical random access channel (PRACH) preamble (the Msg 1 may include a narrowband physical random access channel (NPRACH) preamble in an application of a narrowband Internet of Things (NB-IoT)). Next, the BS sends a second message Msg 2 to the UE, and the Msg 2 may include, for example, a random access response. Then the UE sends a third message Msg 2 to the BS, and the third message may include, for example, a radio resource control (RRC) connection request, a RRC connection reestablishment request, a RRC connection recovery request and the like. Next, the BS sends a fourth message Msg 4 to the UE, and the Msg 4 may include, for example, an early contention resolution, a RRC Connection Setup and the like. Then, data can be transmitted between the UE and the BS.

According to the present embodiment, the uplink data transmission through the Msg 3 (rather than the Msg 1) is mainly based on the following considerations: a limitation of PRACH resource is small; a uplink synchronization can be guaranteed well; an UE identification, control information and payload data can be accommodated well; a collision probability is not increased substantially; and use efficiency of resources is not decreased substantially.

According to an embodiment, in the random access process, it is indicated in a physical random access channel preamble that uplink data is to be sent in the Msg 3.

In addition, a size of a transmission block in the Msg3 may be set in accordance with information contained in the Msg 2 in the random access process.

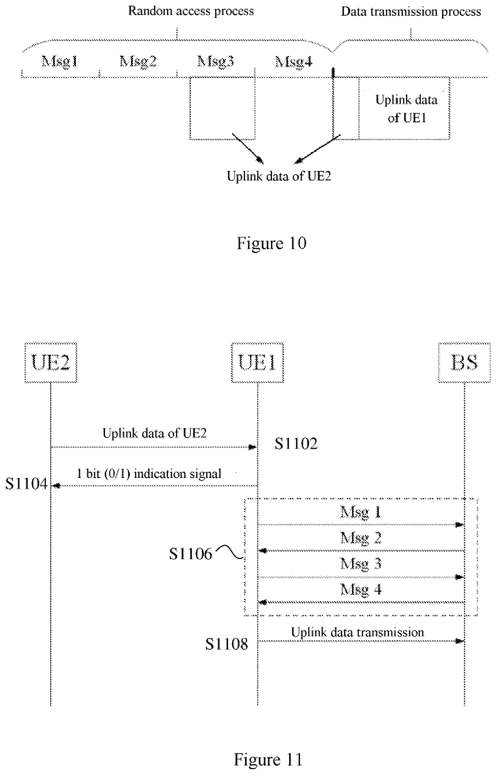

Figure 10 shows an example of data transmission in a case that the UE1 does not start the random access process when the UE1 detects the transmission information from the UE2.

Although it is not shown in Figure, the NPRACH preamble, for example, sent in the Msg 1 may be classified into two types to indicate whether to send the uplink data in the Msg 3. Before the Msg 1 is sent, the UE1 can chose a corresponding type of the NPRACH preamble based on whether to transmit the uplink data in the Msg 3.

In addition, different transmission block sizes (TBS) in the Msg3 may be allowed, which may include, for example, a convenient TBS (for example, 88 bits) and a TBS for uplink data transmission (for example, a size greater than 88 bits). The base station may set a TBS value based on a detected NPRACH preamble and inform the UE of the set TBS value in, for example, the Msg 2.

As shown in Figure 10, if the uplink data of the UE1 is generated before the UE1 completes a transmission of the uplink data of the UE2, the UE1 sends the uplink data of the UE1 in a data transmission process after the uplink data of the UE2 is transmitted.

Next, an overall flow of a relay process according to an embodiment of the present disclosure is illustrated with reference to Figure 11.

In step S1102, the UE2 sends the transmission information to the UE1, a destination of the transmission information is the base station BS.

In step S1104, the UE1 sends the indication information to the UE2 to indicate whether the UE1 is to supply a relay for the transmission information of the UE2.

In a case that the UE1 is not to supply the relay, the UE2 may reselect a relay process (not shown in Figure 10).

In a case that the UE1 is to supply the relay, in step S1106, the UE1 and the BS perform the random access process and the uplink data transmission is performed in step S1108.

It should be noted that above exemplary process is only illustrative and is not limiting.

According to an embodiment of the present disclosure, the another user equipment (UE2) may include a user equipment positioned outside a coverage of the base station or a user equipment at an edge of the coverage.

In the scenario as shown in Figure 7(1), the UE2 is outside a signal coverage of the base station, this means that the UE2 cannot connect to the base station directly. Moreover, in the scenario as shown in Figure 7(2), the UE2 is at an edge of the signal coverage of the base station, this means that although the UE2 can connect to the base station directly, a connection quality may be low. For example, a Signal Interference Noise Ratio (SINR) is low, a reliability of the connection cannot be guaranteed.

In above two cases, the UE2 may transmit the uplink data via a relay performed by the UE1.

In addition, the user equipment (the UE1 and the UE2) according to an embodiment of the present disclosure may include devices for Narrowband Internet of Things (NB-IoT).

Generally, the Narrowband Internet of Things is designed for transmitting infrequent and short messages between the UE and a network, such that the UE can achieve a high cost efficiency and a low power consumption.

One object of the Narrowband Internet of Things is to improve an indoor signal coverage (for example, increased by 20dB). However, a strong coverage performance cannot be achieved due to transmission properties of an adopted frequency band such as a 2.4GHz frequency band. In addition, an addition of a minimum reliability service may reduce a coverage area.

In order to achieve the object that improving the coverage area of the Narrowband Internet of Things, one possible solution is to deploy more base stations. However, this solution results in a high cost, thereby reducing economic competitiveness of the Narrowband Internet of Things. Therefore, a multi-hop relay for the Narrowband Internet of Things in the unlicensed frequency band may be considered. With embodiments of the present disclosure, the delay of the relay transmission is reduced.

In above descriptions of the device according to embodiments of the present disclosure, it is apparent that some processes and methods are also disclosed. Next, the wireless communication method according to embodiments of the present disclosure is illustrated without repeating details described above.

As shown in Figure 2, according to an embodiment, a wireless communication method for the user equipment side includes the following steps.

In step S210, transmission information sent by another user equipment via an unlicensed frequency band is received by a current user equipment, a destination of the transmission information is a service base station of the current user equipment.

In step S220, indication information is sent to the another user equipment, the indication information indicates whether the current user equipment is to perform a relay for the transmission information.

According to an embodiment, indication information indicating that the current user equipment does not perform a relay for the transmission information is sent to the another user equipment under a predetermined condition, the predetermined condition includes at least one of the following conditions:
the current user equipment itself has uplink data to be sent;
a data amount of the uplink data to be sent is greater than a first predetermined threshold; and
an available buffer capacity of the current user equipment is less than a second predetermined threshold.

Embodiments of devices and methods for the relay user equipment (for example, the UE1) side are described. In addition, devices and methods for the source user equipment (for example, the UE2) side are further provided in embodiments of the present disclosure. Next, embodiments for the source user equipment side are illustrated without repeating corresponding details.

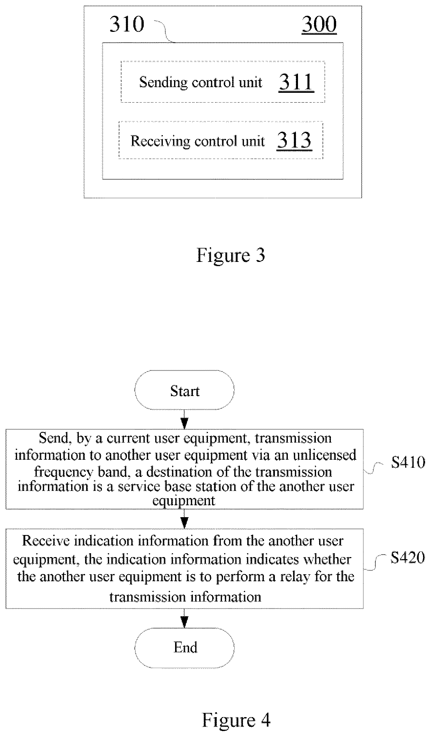

As shown in Figure 3, an electronic device 300 for the user equipment side according to the present embodiment includes a processing circuitry 310. The processing circuitry 310 includes a sending control unit 311 and a receiving control unit 313.

The sending control unit 311 is configured to perform control to send, by a current user equipment, transmission information to another user equipment via an unlicensed frequency band, a destination of the transmission information is a service base station of the another user equipment.

The receiving control unit 313 is configured to perform control to receive indication information from the another user equipment, the indication information indicates whether the another user equipment is to perform a relay for the transmission information.

According to an embodiment, the receiving control unit 313 is configured to perform control to receive the indication information via a physical sidelink control channel.

According to an embodiment, the sending control unit 311 is configured to perform control to send a scheduling request and/or data to the another user equipment at a predetermined timing.

According to another embodiment, the sending control unit 311 is configured to perform control to send a wakeup signal to the another user equipment.

According to an embodiment, the sending control unit 311 is configured to perform control to send the transmission information to the another user equipment by using a resource selected from a resource pool.

According to another embodiment, the sending control unit 311 is configured to perform control to send the transmission information by using a resource indicated by the another user equipment.

Figure 4 shows a wireless communication method for the user equipment side (the source user equipment side) according to an embodiment. The method includes step S410 and step S420.

In step S410, transmission information is sent by a current user equipment to another user equipment via an unlicensed frequency band, a destination of the transmission information is a service base station of the another user equipment.

In step S420, indication information is received from the another user equipment, the indication information indicates whether the another user equipment is to perform a relay for the transmission information.

In addition, devices and methods for the base station side are also provided according to embodiments of the present disclosure. Next, embodiments for the base station side are illustrated without repeating corresponding details.

As shown in Figure 5, an electronic device 500 for the base station side according to the present embodiment includes a processing circuitry 510. The processing circuitry 510 includes a receiving control unit 511.

The receiving control unit 511 is configured to perform control to receive transmission information from a second user equipment which is relayed via a first user equipment. The transmission information is sent by the second user equipment to the first user equipment via an unlicensed frequency band. The first user equipment is configured to send indication information to the second user equipment, the indication information indicates whether the first user equipment is to perform a relay for the transmission information.

According to an embodiment, the processing circuitry 510 is configured to control to perform a random access process with the first user equipment, and to receive at least a part of the transmission information in Msg 3 in the random access process.

According to an embodiment, the processing circuitry 510 is configured to perform control to contain, in Msg 2 in the random access process, information indicating a size of a transmission block in Msg 3.

Figure 6 shows a wireless communication method for the base station side according to an embodiment. The method includes step S610. In step S610, transmission information from a second user equipment which is relayed via a first user equipment is received. The transmission information is sent by the second user equipment to the first user equipment via an unlicensed frequency band, and the first user equipment is configured to send indication information to the second user equipment, the indication information indicates whether the first user equipment is to perform a relay for the transmission information.

In addition, a computer readable medium is further provided according to embodiments of the present disclosure. The computer readable medium includes executable instructions that, when executed by an information processing apparatus, cause the information processing apparatus to implement the method according to above embodiments.

A wireless communication device for the user equipment side and a wireless communication device for the base station side are further provided according to embodiments of the present disclosure. Above wireless communication devices include a transceiver device and the processor described with the above embodiments.

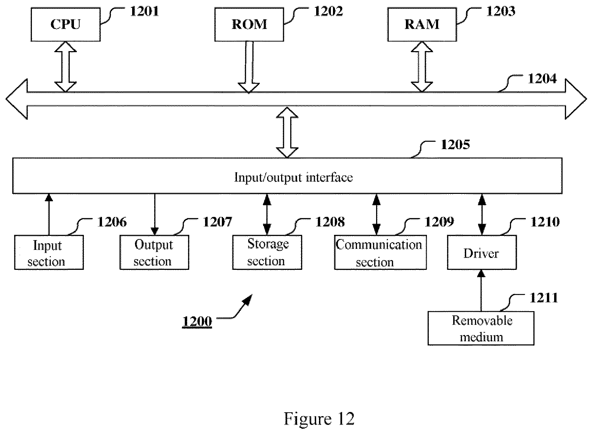

As an example, various steps of the methods above and various modules and/or units of the apparatuses above may be implemented as software, firmware, hardware or a combination thereof. In a case of implementing by software or firmware, programs consisting of the software for implementing the methods above can be installed to a computer with a dedicated hardware structure (for example a general-purpose computer 1200 shown in Figure 12) from the storage medium or the network. The computer can perform various types of functions when installed with various types of programs.

In Figure 12, a central processing unit (CPU) 1201 performs various types of processing according to programs stored in a read only memory (ROM) 1202 or programs loaded from a storage section 1208 to a random access memory (RAM) 1203. Data required when the CPU 1201 performs various types of processing is also stored in the RAM 1203 as needed. The CPU 1201, the ROM 1202 and the RAM 1203 are linked to each other via a bus 1204. An input/output interface 1205 is also linked to the bus 1204.

The following components are linked to the input/output interface 1205: an input section 1206 (including a keyboard, and a mouse and so on), an output section 1207 (including a display, for example a cathode ray tube (CRT), a liquid crystal display (LCD), and a loudspeaker and so on), a storage section 1208 (including a hard disk and so on), and a communication section 1209 (including a network interface card for example a LAN card, and a modem and so on). The communication section 1209 performs communication processing via a network for example the Internet. A driver 1210 may also be linked to the input/output interface 1205 as needed. A removable medium 1211 for example a magnetic disk, an optical disk, a magnetic-optical disk and a semiconductor memory may be installed on the driver 1210 as needed, such that computer programs read from the removable medium 1211 are installed on the storage section 1208 as needed.

In a case of performing the series of processing described above by software, programs consisting of the software are installed from the network for example the Internet or the storage medium for example the removable medium 1211.

Those skilled in the art should understand that the storage medium is not limited to the removable medium 1211 shown in Figure 12 which stores programs and is distributed separately from the device to provide the programs to the user. Examples of the removable medium 1211 include: a magnetic disk (including a floppy disk (registered trademark), an optical disk (including a compact disk read only memory (CD-ROM) and a digital versatile disk (DVD)), a magnetic-optical disk (including a mini disk (MD) (registered trademark)), and a semiconductor memory. Alternatively, the storage medium may be a hard disk included in the ROM 1202 and the storage section 1208 which stores programs. The storage medium and the device including thereof together are distributed to the user.

A program product storing machine readable instruction codes is further provided according to the embodiments of the present disclosure. When read and executed by a machine, the instruction codes cause the machine to perform the method according to the embodiment of the present disclosure.

Accordingly, a storage medium for carrying the program product storing the machine readable instruction codes is further provided according to the present disclosure. The storage medium includes but not limited to a floppy disk, an optical disk, a magnetic-optical disk, a storage card and a memory stick and so on.

The embodiments of the present disclosure further relate to an electronic device in the following. In a case that the electronic device is for base station side, the electronic device may be implemented as any type of evolved node B (eNB), such as a macro eNB and a small eNB. The small eNB may be an eNB covering a cell smaller than a macro cell, such as a pico eNB, a micro eNB and a home (femto) eNB. Alternatively, the electronic device may be implemented as any other type of base stations, such as a NodeB and a base transceiver station (BTS). Preferably, the electronic device may be implemented as gNB in a 5Gsystem. The electronic device may include: a body configured to control wireless communication (also referred to as a base station device); and one or more remote radio heads (RRH) located at positions different from the body. In addition, various types of terminals described in the following each may function as a base station to operate by performing functions of the base station temporarily or in a semi-permanent manner.

In a case that the electronic device is for user equipment side, the electronic device may be implemented as mobile terminals (such as a smart phone, a tablet personal computer (PC), a notebook PC, a portable game terminal, a portable/dongle mobile router and a digital camera) or a vehicle terminal (such as an automobile navigation device). In addition, the electronic device may be a wireless communication module installed on each of the above terminals (such as an integrated circuit module including one or more chips).

### [Application example of a terminal device]

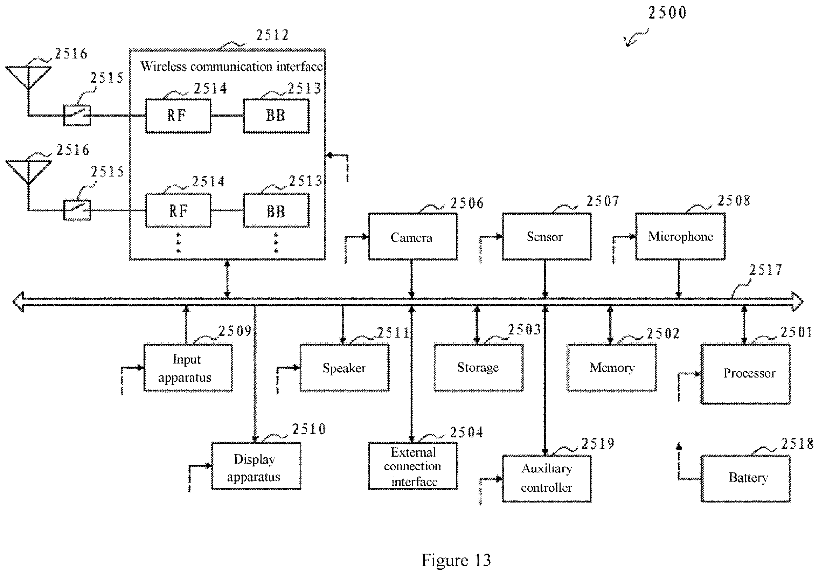

Figure 13 is a block diagram showing an example of a schematic configuration of a smart phone 2500 to which the technology according to the present disclosure may be applied. The smart phone 2500 includes a processor 2501, a memory 2502, a storage 2503, an external connection interface 2504, a camera 2506, a sensor 2507, a microphone 2508, an input apparatus 2509, a display apparatus 2510, a speaker 2511, a wireless communication interface 2512, one or more antenna switches 2515, one or more antennas 2516, a bus 2517, a battery 2518, and an auxiliary controller 2519.

The processor 2501 may be, for example, a CPU or a system on a chip (SoC), and controls functions of an application layer and another layer of the smart phone 2500. The memory 2502 includes RAM and ROM, and stores a program that is executed by the processor 2501, and data. The storage 2503 may include a storage medium such as a semiconductor memory and a hard disk. The external connection interface 2504 is an interface for connecting an external apparatus such as a memory card and a universal serial bus (USB) apparatus to the smart phone 2500.

The camera 2506 includes an image sensor such as a charge coupled device (CCD) and a complementary metal oxide semiconductor (CMOS), and generates a captured image. The sensor 2507 may include a group of sensors such as a measurement sensor, a gyro sensor, a geomagnetic sensor, and an acceleration sensor. The microphone 2508 converts sounds that are inputted to the smart phone 2500 into audio signals. The input apparatus 2509 includes, for example, a touch sensor configured to detect touch onto a screen of the display apparatus 2510, a keypad, a keyboard, a button, or a switch, and receive an operation or information inputted from a user. The display apparatus 2510 includes a screen such as a liquid crystal display (LCD) and an organic light-emitting diode (OLED) display, and displays an output image of the smart phone 2500. The speaker 2511 converts audio signals that are outputted from the smart phone 2500 into sounds.

The wireless communication interface 2512 supports any cellular communication scheme such as LTE and LTE-Advanced, and performs wireless communication. The wireless communication interface 2512 may typically include, for example, a base band (BB) processor 2513 and a radio frequency (RF) circuit 2514. The BB processor 2513 may perform, for example, encoding/decoding, modulating/demodulating, and multiplexing/demultiplexing, and performs various types of signal processing for wireless communication. Meanwhile, the RF circuit 2514 may include, for example, a mixer, a filter, and an amplifier, and transmits and receives radio signals via the antenna 2516. The wireless communication interface 2512 may be a chip module having the BB processor 2513 and the RF circuit 2514 integrated thereon. The wireless communication interface 2512 may include multiple BB processors 2513 and multiple RF circuits 2514, as illustrated in Figure 13. Although Figure 13 illustrates the example in which the wireless communication interface 2512 includes the multiple BB processors 2513 and the multiple RF circuits 2514, the wireless communication interface 2512 may also include a single BB processor 2513 or a single RF circuit 2514.

Furthermore, in addition to a cellular communication scheme, the wireless communication interface 2512 may support another type of wireless communication scheme such as a short-distance wireless communication scheme, a near field communication scheme, and a wireless local area network (LAN) scheme. In this case, the wireless communication interface 2512 may include the BB processor 2513 and the RF circuit 2514 for each wireless communication scheme.

Each of the antenna switches 2515 switches connection destinations of the antennas 2516 among multiple circuits (such as circuits for different wireless communication schemes) included in the wireless communication interface 2512.

Each of the antennas 2516 includes a single or multiple antenna elements (such as multiple antenna elements included in an MIMO antenna), and is used for the wireless communication interface 2512 to transmit and receive radio signals. The smart phone 2500 may include the multiple antennas 2516, as illustrated in Figure 13. Although Figure 13 illustrates the example in which the smart phone 2500 includes the multiple antennas 2516, the smart phone 2500 may also include a single antenna 2516.

Furthermore, the smart phone 2500 may include the antenna 2516 for each wireless communication scheme. In this case, the antenna switches 2515 may be omitted from the configuration of the smart phone 2500.

The bus 2517 connects the processor 2501, the memory 2502, the storage 2503, the external connection interface 2504, the camera 2506, the sensor 2507, the microphone 2508, the input apparatus 2509, the display apparatus 2510, the speaker 2511, the wireless communication interface 2512, and the auxiliary controller 2519 to each other. The battery 2518 supplies power to blocks of the smart phone 2500 illustrated in Figure 13 via feeder lines, which are partially shown as dashed lines in the figure. The auxiliary controller 2519 operates a minimum necessary function of the smart phone 2500, for example, in a sleep mode.

In the smart phone 2500 shown in Figure 13, the transceiver device of the wireless communication device for the user equipment side according to an embodiment of the present disclosure may be implemented by the wireless communication interface 2512. At least a part of functions of the electronic device for the user equipment side or the processing circuitry and/or each unit of the wireless communication device according to an embodiment of the present disclosure may be implemented by the processor 2501 or the auxiliary controller 2519. For example, power consumption of the battery 2518 may be reduced by performing a part of the functions of the processor 2501 by the auxiliary controller 2519. In addition, the processor 2501 or the auxiliary controller 2519 may perform at least a part of the functions of the electronic device for the user equipment side or the processing circuitry and/or each unit of the wireless communication device according to an embodiment of the present disclosure by executing programs stored in the memory 2502 or the storage 2503.

### [Application example of a base station]

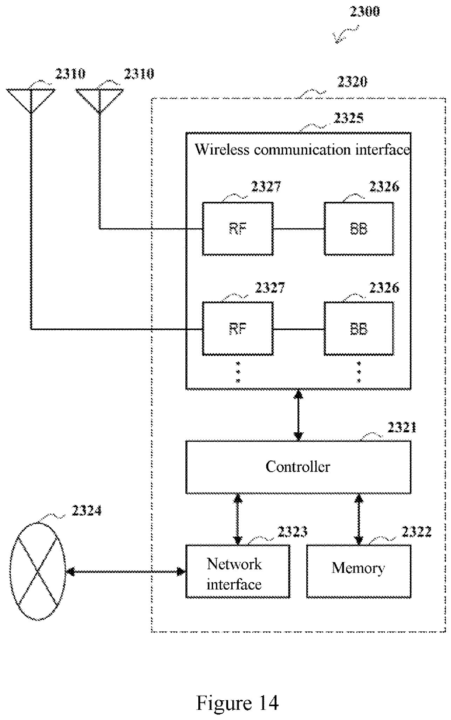

Figure 14 is a block diagram showing an example of a schematic configuration of a gNB to which the technology according to the present disclosure may be applied. A gNB 2300 includes multiple antennas 2310 and a base station device 2320. The base station device 2320 and each antenna 2310 may be connected to each other via a radio frequency (RF) cable.

Each of the antennas 2310 includes one or more antenna elements (such as multiple antenna elements included in a multiple input multiple output (MIMO) antenna) and is used by the base station device 2320 to transmit and receive a radio signal. As shown in Figure 14, the gNB 2300 may include multiple antennas 2310. For example, the multiple antennas 2310 may be compatible with multiple frequency bands used by the gNB 2300.

The base station device 2320 includes a controller 2321, a memory 2322, a network interface 2323 and a wireless communication interface 2325.

The controller 2321 may be a CPU or a DSP and control various functions of higher layers of the base station device 2320. For example, the controller 2321 generates a data packet based on data in a signal processed by the wireless communication interface 2325, and transfers the generated packet via a network interface 2323. The controller 2321 may bind data from multiple baseband processors to generate a binding packet and transfer the generated binding packet. The controller 2321 may have logic functions for performing the following control: radio resource control, radio carrying control, mobility management, admission control and schedule. The control may be performed in combination with an adjacent gNB or a core network node. The memory 2322 includes RAM and ROM, and stores programs executed by the controller 2321 and various types of control data (such as a terminal list, transmission power data and scheduling data).

The network interface 2323 is configured to connect the base station device 2320 to a communication interface of the core network 2324. The controller 2321 may communication with the core network node or another gNB via the network interface 2323. In this case, the gNB 2300 and the core network node or another gNB may be connected to each other via a logic interface (such as an S1 interface and an X2 interface). The network interface 2323 may be a wired communication interface or a wireless communication interface for a wireless backhaul line. If the network interface 2323 is a wireless communication interface, the network interface 2323 may use a higher frequency band for wireless communication as compared with the frequency band used by the wireless communication interface 2325.

The wireless communication interface 2325 supports any cellular communication scheme (such as long term evolution (LTE) and LTE-advanced), and provides a radio connection to a terminal located in a cell of the gNB 2300 via an antenna 2310. The wireless communication interface 2325 may generally include a BB processor 2326 and an RF circuit 2327. The BB processor 2326 may perform for example encoding/decoding, modulating/demodulating and multiplexing/demultiplexing, and various types of signal processing of layers (such as L1, medium access control (MAC), radio link control (RLC) and packet data convergence protocol (PDCP)). Instead of the controller 2321, the BB processor 2326 may have a part or all of the above logic functions. The BB processor 2326 may be a memory storing communication control programs or a module including a processor configured to execute programs and a related circuit. Updating programs may change functions of the BB processor 2326. The module may be a card or a blade inserted into a slot of the base station device 2320. Alternatively, the module may be a chip installed on the card or the blade. The RF circuit 2327 may include for example a mixer, a filter or an amplifier, and transmits and receives a radio signal via the antenna 2310.

As shown in Figure 14, the wireless communication interface 2325 may include multiple BB processors 2326. For example, the multiple BB processors 2326 may be compatible with multiple frequency bands used by the gNB 2300. As shown in Figure 14, the wireless communication interface 2325 may include multiple RF circuits 2327. For example, the multiple RF circuits 2327 may be compatible with multiple antenna elements. Although Figure 14 shows an example in which the wireless communication interface 2325 includes multiple BB processors 2326 and multiple RF circuits 2327, the wireless communication interface 2325 may include a single BB processor 2326 or a single RF circuit 2327.

In the gNB 2300 shown in Figure 14, the transceiver device of the wireless communication device for the base station side according to an embodiment of the present disclosure may be implemented by the wireless communication interface 2325. At least a part of the functions of the electronic device for the base station side or the processing circuitry and/or each unit of the wireless communication device according to an embodiment of the present disclosure may be implemented by the controller 2321. For example, the controller 2321 may perform at least a part of the functions of the electronic device for the base station side or the processing circuitry and/or each unit of the wireless communication device according to an embodiment of the present disclosure by executing the programs stored in the memory 2322.

In the description of specific embodiments of the present disclosure above, features described and/or illustrated for one embodiment may be used in one or more other embodiments in the same or similar manner, combined with features in other embodiments, or substitute for features in other embodiments.

It should be noted that, terms "including/comprising" used herein refer to existing of features, elements, steps or components, but existing or adding of one or more other features, elements, steps or components is not excluded.

In the above embodiments and examples, reference numerals consisting of numbers are used to indicate various steps and/or units. Those skilled in the art should understand that the reference numerals are used to facilitate describing and drawing, and are not intended to indicate an order or limit in any way.

In addition, the method according to the present disclosure is not limited to be performed in a time order described in the description, and may be performed according to other time orders, in parallel or independently. Therefore, the order in which the method described in the description is performed does not limit the technical scope of the present disclosure.

Although the present disclosure is disclosed by the description of specific embodiments of the present disclosure above, it should be understood that all the embodiments and examples described above are only schematic and are not intended to limit. For those skilled in the art, various changes, improvements or equivalents may be designed for the present disclosure within the spirit and scope of the appended claims. The changes, improvements or equivalents should be regarded as falling within the protection scope of the present disclosure.

## Claims

1. An electronic device for user equipment side, comprising a processing circuitry,
the processing circuitry is configured to perform control to:
receive, by a current user equipment, transmission information sent by another user equipment via an unlicensed frequency band, a destination of the transmission information being a service base station of the current user equipment; and
send indication information to the another user equipment, the indication information indicating whether the current user equipment is to perform a relay for the transmission information.

2. The electronic device according to claim 1, wherein the processing circuitry is configured to send, under a predetermined condition, to the another user equipment, indication information indicating that the current user equipment does not perform a relay for the transmission information, the predetermined condition comprising at least one of the following conditions:
the current user equipment itself has uplink data to be sent;
a data amount of the uplink data to be sent is greater than a first predetermined threshold; and
an available buffer capacity of the current user equipment is less than a second predetermined threshold.

3. The electronic device according to claim 1, wherein the processing circuitry is configured to perform control to send the indication information via a physical sidelink control channel.

4. The electronic device according to claim 1, wherein the processing circuitry is configured to perform control to send the indication information by sharing a maximum occupancy time of the another user equipment for the unlicensed frequency band.

5. The electronic device according to claim 1, wherein the processing circuitry is configured to perform control to receive a scheduling request and/or data from the another user equipment at a predetermined timing.

6. The electronic device according to claim 1, wherein the processing circuitry is configured to perform control to detect a wakeup signal from the another user equipment.

7. The electronic device according to claim 1, wherein the transmission information sent by the another user equipment is sent using a resource selected by the another user equipment from a resource pool.

8. The electronic device according to claim 7, wherein the resource pool is configured in advance or configured semi-statically by a base station.

9. The electronic device according to claim 1, wherein the transmission information sent by the another user equipment is sent using a resource indicated by the current user equipment.

10. The electronic device according to claim 9, wherein the resource is indicated by the current user equipment to the another user equipment through a sidelink grant.

11. The electronic device according to claim 1, wherein the processing circuitry is configured to:
in a case where at the time of receipt of the transmission information from the another user equipment the current user equipment has performed a random access process for sending uplink data to be sent of the current user equipment, perform control to send the transmission information of the another user equipment upon completion of sending the uplink data of the current user equipment.

12. The electronic device according to claim 1, wherein the processing circuitry is configured to:
in a case where at the time of receipt of the transmission information from the another user equipment the current user equipment has no uplink data to be sent, control to perform a random access process for sending the transmission information of the another user equipment, and to send at least a part of the transmission information of the another user equipment in Msg 3 in the random access process.

13. The electronic device according to claim 12, wherein the processing circuitry is configured to:
indicate, in a physical random access channel preamble, that uplink data is to be sent in Msg 3, in the random access process.

14. The electronic device according to claim 12, wherein the processing circuitry is configured to:
set a size of a transmission block in Msg3 in accordance with information contained in Msg 2 in the random access process.

15. The electronic device according to any one of claims 1 to 14, wherein the another user equipment is positioned outside a coverage of the base station or at an edge of the coverage.

16. The electronic device according to any one of claims 1 to 14, wherein the current user equipment and the another user equipment include devices for narrowband Internet of things.

17. A wireless communication method for user equipment side, comprising:
receiving, by a current user equipment, transmission information sent by another user equipment via an unlicensed frequency band, a destination of the transmission information being a service base station of the current user equipment; and
sending indication information to the another user equipment, the indication information indicating whether the current user equipment is to perform a relay for the transmission information.

18. The method according to claim 17, wherein indication information indicating that the current user equipment does not perform a relay for the transmission information is sent to the another user equipment under a predetermined condition, the predetermined condition comprising at least one of the following conditions:
the current user equipment itself has uplink data to be sent;
a data amount of the uplink data to be sent is greater than a first predetermined threshold; and
an available buffer capacity of the current user equipment is less than a second predetermined threshold.

19. An electronic device for user equipment side, comprising a processing circuitry,
the processing circuitry is configured to perform control to:
send, by a current user equipment, transmission information to another user equipment via an unlicensed frequency band, a destination of the transmission information being a service base station of the another user equipment; and
receive indication information from the another user equipment, the indication information indicating whether the another user equipment is to perform a relay for the transmission information.

20. The electronic device according to claim 19, wherein the processing circuitry is configured to perform control to receive the indication information via a physical sidelink control channel.

21. The electronic device according to claim 19, wherein the processing circuitry is configured to perform control to send a scheduling request and/or data to the another user equipment at a predetermined timing.

22. The electronic device according to claim 19, wherein the processing circuitry is configured to perform control to send a wakeup signal to the another user equipment.

23. The electronic device according to claim 19, wherein the processing circuitry is configured to perform control to send the transmission information to the another user equipment by using a resource selected from a resource pool.

24. The electronic device according to claim 19, wherein the processing circuitry is configured to perform control to send the transmission information by using a resource indicated by the another user equipment.

25. A wireless communication method for user equipment side, comprising:
sending, by a current user equipment, transmission information to another user equipment via an unlicensed frequency band, a destination of the transmission information being a service base station of the another user equipment; and
receiving indication information from the another user equipment, the indication information indicating whether the another user equipment is to perform a relay for the transmission information.

26. An electronic device for base station side, comprising a processing circuitry,
the processing circuitry is configured to perform control to:
receive transmission information from a second user equipment which is relayed via a first user equipment,
wherein the transmission information is sent by the second user equipment to the first user equipment via an unlicensed frequency band, and
the first user equipment is configured to send indication information to the second user equipment, the indication information indicating whether the first user equipment is to perform a relay for the transmission information.

27. The electronic device according to claim 26, wherein the processing circuitry is configured to:
control to perform a random access process with the first user equipment, and to receive at least a part of the transmission information in Msg 3 in the random access process.

28. The electronic device according to claim 27, wherein the processing circuitry is configured to:
perform control to contain, in Msg 2 in the random access process, information indicating a size of a transmission block in Msg 3.

29. A wireless communication method for base station side, comprising:
receiving transmission information from a second user equipment which is relayed via a first user equipment,
wherein the transmission information is sent by the second user equipment to the first user equipment via an unlicensed frequency band, and
the first user equipment is configured to send indication information to the second user equipment, the indication information indicating whether the first user equipment is to perform a relay for the transmission information.

30. A computer readable medium comprising executable instructions that, when executed by an information processing apparatus, cause the information processing apparatus to implement the method according to claim 17, 18, 25 or 29.
